# EUROPÄISCHE PATENTSCHRIFT

(11) **EP 3 560 016 B1**
(45) Veröffentlichungstag und Bekanntmachung des Hinweises auf die Patenterteilung: **30.06.2021**
(21) Anmeldenummer: 17823080.1
(22) Anmeldetag: 14.12.2017
(51) Int. Cl.: H01M 8/04089, H01M 8/04082, H01M 8/0438, H01M 8/04746

(54) **BRENNSTOFFZUFÜHRANORDNUNG FÜR EIN BRENNSTOFFZELLENSYSTEM UND BRENNSTOFFZELLENSYSTEM**
FUEL SUPPLY DEVICE FOR FUEL CELL SYSTEM AND FUEL CELL SYSTEM
DISPOSITIF D'ALIMENTATION EN COMBUSTIBLE POUR PILE À COMBUSTIBLE ET SYSTEM DE PILE À COMBUSTIBLE

(30) Priorität: 21.12.2016 DE 102016125165
(43) Veröffentlichungstag der Anmeldung: 30.10.2019
(73) Patentinhaber: Proton Motor Fuel Cell GmbH, 82178 Puchheim (DE); Meder, Quirin, 86938 Schondorf am Ammersee (DE)
(72) Erfinder: MEDER, Quirin, 86938 Schondorf am Ammersee (DE)
(74) Vertreter: Schmitt-Nilson Schraud Waibel Wohlfrom Patentanwälte Partnerschaft mbB
(86) Internationale Anmeldenummer: PCT/EP2017/082905
(87) Internationale Veröffentlichungsnummer: WO 2018/114623

(56) Entgegenhaltungen:
- EP-A1- 2 618 416
- DE-A1- 10 251 878

## Beschreibung

Die vorliegende Erfindung betrifft eine Brennstoffzuführanordnung für ein Brennstoffzellensystem mit einem Brennstoffversorgungsanschluss zur Verbindung mit einem Brennstoff-Vorratsspeicher zur Bevorratung von Brennstoff und einem Brennstoffzuführanschluss zur Verbindung mit einer Brennstoffzellenanordnung zur Erzeugung elektrischer Energie. Ein Brennstoffzuführkanal dient zur Zufuhr von Brennstoff aus dem Brennstoff-Vorratsspeicher zur Brennstoffzellenanordnung und ist zwischen dem Brennstoffversorgungsanschluss und dem Brennstoffzuführanschluss angeordnet. Weiterhin ist ein Brennstoffzirkulationskanal vorgesehen, der mit dem Brennstoffzuführkanal verbunden ist, um unverbrauchten Brennstoff aus der Brennstoffzellenanordnung in den Brennstoffzuführkanal zurückzuführen. Auch ist eine passive Strahldüsenanordnung vorgesehen, die in dem Brennstoffzuführkanal angeordnet und eingerichtet ist, unter Nutzung von Strömungsunterdruck unverbrauchten Brennstoff aus dem Brennstoffzirkulationskanal anzusaugen und in den Brennstoffzuführkanal für die Zufuhr zur Brennstoffzellenanordnung einzumischen.

Brennstoffzellen, die mit einer solchen Anordnung betrieben werden, erzeugen elektrische Energie aus einem Brennstoff, insbesondere Wasserstoff, und einem Oxidanten, insbesondere Sauerstoff. Sauerstoff wird in der Regel in Form von Luft zugeführt, und Wasserstoff wird aus einem Vorratsspeicher zugeführt oder auch vor Ort erzeugt, beispielsweise aus Methanol. Eine gängige Variante sowohl für mobile als auch für stationäre Brennstoffzellensysteme ist die Wasserstoffversorgung aus Hochdrucktanks. In den Hochdrucktanks wird Wasserstoff unter einem Druck von bis zu 80 MPa (800 bar) gespeichert Ein oder mehrere Hochdrucktanks können ein Tankmodul bilden. Am Ausgang des Tankmoduls wird der Druck mittels eines Druckminderers auf ein Verteiler-Druckniveau reduziert. In diesem Mitteldruckbereich beträgt der Druck typischerweise etwa 0,5-1,2 MPa (5-12 bar).

Die Brennstoffzellen sind üblicherweise zu einem oder mehreren Brennstoffzellenstapeln zusammengefasst und bilden zusammen mit zahlreichen Peripherieelementen, wie Leitungen zur Zuführung von frischen Betriebsgasen und Kühlwasser, zur Abführung und/oder Rezirkulierung von gebrauchten Betriebsgasen und Kühlwasser, mit Behandlungseinrichtungen für diese Betriebsmedien, Sensoren, Ventilen, Reglern, etc., ohne die der Betrieb der Brennstoffzellen nicht möglich wäre, ein Brennstoffzellensystem, das oftmals in ein oder mehreren Brennstoffzellenmodulen zusammengefasst ist. Eine Versorgungsleitung verbindet das Tankmodul mit dem Brennstoffzellenmodul, das heißt mit den in ein Gehäuse eingebauten Brennstoffzellen und den erforderlichen Peripherieelementen.

Eine solche Anordnung ist beispielsweise aus der DE 102 51 878 A1 und der DE 10 2006 037 799 A1 bekannt. Ein Brennstoffkreis des Brennstoffzellensystems, bei welchem eine Brennstoffpumpe bei einer möglichen Steuerung/Regelung des Energieverbrauchs gedrosselt werden kann und zusammen damit die Brennstoff-Zirkulationsflussrate in der Zeit sichergestellt werden kann, in der sich die Leistung einer Brennstoffzelle ändert, umfasst eine Brennstoffzelle, die elektrische Energie erzeugt, indem sie mit Brennstoff und mit einem Oxidationsmittel gespeist wird, einen Brennstoffzufuhrkanal für die Zufuhr von Brennstoff zur Brennstoffzelle, einen Brennstoffzirkulationskanal, der veranlasst, dass aus der Brennstoffzelle abgeführter unverbrauchter Brennstoff zwecks Rückführung in den Brennstoffzufuhrkanal einströmt, eine Brennstoffpumpe (Wasserstoffpumpe), die unverbrauchten Brennstoff ansaugt und ausstößt, und einen Ejektor (auch oftmals Strahldüse genannt), der unter Nutzung von Unterdruck, der entsteht, wenn Brennstoff strömt, unverbrauchten Brennstoff ansaugt und veranlasst, dass dieser in den Brennstoff eingemischt wird, der danach in die Brennstoffzelle geleitet wird.

Um den stabilen Betrieb einer Brennstoffzelle zu gewährleisten, ist es im allgemeinen notwendig, die Strömungsgeschwindigkeit auf der Wasserstoffseite über einem bestimmten Wert (ca. 3 m/s) zu halten. Dies ist entweder aktiv (unter Einsatz von Antriebsenergie) über den Einsatz einer Pumpe oder passiv mittels einer Strahldüse möglich. Eine Strahldüse hat gegenüber einer Pumpe den Vorteil, dass sie ohne den Einsatz von elektrischer Energie den Brennstoff im Brennstoffzirkulationskanal zirkuliert, es keine Verschleißteile gibt und sie keine bis nahezu keine Geräuschemission entwickelt. Passive Strahldüsen nutzen den Druckunterschied zwischen dem Triebdruck und dem Ausgangsdruck, um an der Saugseite einen Unterdruck und somit eine Strömung zu erzeugen.

Dies kann in dem Falle einer möglichst effizienten Nutzung von Brennstoffspeichern (etwa Brennstoff-Vorratsbehältern) ein Nachteil sein. In einem Anwendungsfall sollte der Triebdruck im maximalen Betriebspunkt bei ca. 8 bis 9 bar liegen, um die Strahldüse effizient zu betreiben. Um einen Speicher jedoch möglichst effizient nutzen zu können, muss dieser auf einen möglichst geringen Druck (nahe atmosphärischem Druck) entladen werden können. Dies bedingt bei der Nutzung einer Strahldüse, dass entweder der Speicher nicht komplett genutzt werden kann, weil bei einem höheren Betriebsdruck gefahren werden muss, oder das System nicht über den gesamten Speicherinhalt hinweg in seinem gesamten Leistungsbereich genutzt werden kann. Umgekehrt bedeutet dies, dass das System nicht mittels einer Strahldüse zirkuliert werden kann, wenn der gesamte Speicherinhalt zu nutzen ist, sondern auf eine Brennstoffpumpe zurückgegriffen werden muss, was wiederum u.a. die Effizienz verringert.

EP 2 618 416 betrifft ein Brennstoffzellensystem, das versehen ist mit einer Zelleneinheit, die Elektrizität durch Wasserstoff enthaltendes Gas und Sauerstoff enthaltendes Gas erzeugt, und einen Rückführungsmechanismus aufweist zum Rückführen von Wasserstoff enthaltendem Abgas, das von der Zelleneinheit abgegeben wird, zu der Zelleneinheit. Das Brennstoffzellensystem weist eine Durchflussratenbestimmungseinheit auf, die bestimmt, ob das der Zelleneinheit zugeführte wasserstoffhaltige Gas geringer als eine vorbestimmte Durchflussrate ist oder nicht, und einen Gaszufuhrdruckänderungsmechanismus, der bewirkt, dass sich der Druck des Wasserstoff enthaltenden Gases ändert, um zuzunehmen und abzunehmen, wenn bestimmt wird, dass das der Zelleneinheit zugeführte Wasserstoff enthaltende Gas kleiner als die vorbestimmte Strömungsmenge ist.

DE 102 51 878 A1 betrifft einen Brennstoffkreis eines Brennstoffzellensystems, bei welchem eine Brennstoffpumpe bei einer möglichen Steuerung/Regelung des Energieverbrauchs gedrosselt werden kann und zusammen damit die Brennstoff-Zirkulationsflussrate in der Zeit sichergestellt werden kann, in der sich die Leistung einer Brennstoffzelle ändert. Der Brennstoffkreis umfasst eine Brennstoffzelle, einen Brennstoffzuführkanal für die Zufuhr von Brennstoff zur Brennstoffzelle, einen Brennstoffzirkulationskanal, der veranlasst, dass aus der Brennstoffzelle abgeführter unverbrauchter Brennstoff zwecks Rückführung in den Brennstoffzuführkanal einströmt, eine Brennstoffpumpe (Wasserstoffpumpe), die unverbrauchten Brennstoff ansaugt und ausstößt, und einen Ejektor, der unter Nutzung von Unterdruck, der entsteht, wenn Brennstoff strömt, unverbrauchten Brennstoff ansaugt und veranlasst, dass dieser in den Brennstoff eingemischt wird, der danach in die Brennstoffzelle geleitet wird.

Der vorliegenden Erfindung liegt die Aufgabe zugrunde, eine Brennstoffzuführanordnung für ein Brennstoffzellensystem der eingangs genannten Art anzugeben, welches in einem relativ großen Betriebsbereich effizient mit einem Brennstoff-Vorratsspeicher und einer Strahldüse betrieben werden kann.

Die Erfindung betrifft Brennstoffzuführanordnung für ein Brennstoffzellensystem gemäß Anspruch 1. Weiterhin betrifft die Erfindung ein Brennstoffzellensystem mit einer derartigen Brennstoffzuführanordnung und einer Brennstoffzellenanordnung.

Gemäß einem Aspekt betrifft die Erfindung eine Brennstoffzuführanordnung für ein Brennstoffzellensystem aufweisend: einen Brennstoffversorgungsanschluss zur Verbindung mit einem Brennstoff-Vorratsspeicher zur Bevorratung von Brennstoff und einen Brennstoffzuführanschluss zur Verbindung mit einer Brennstoffzellenanordnung zur Erzeugung elektrischer Energie, einen Brennstoffzuführkanal für die Zufuhr von Brennstoff aus dem Brennstoff-Vorratsspeicher zur Brennstoffzellenanordnung, der zwischen dem Brennstoffversorgungsanschluss und dem Brennstoffzuführanschluss angeordnet ist, einen Brennstoffzirkulationskanal, der mit dem Brennstoffzuführkanal verbunden ist, um aus der Brennstoffzellenanordnung unverbrauchten Brennstoff in den Brennstoffzuführkanal zurückzuführen, und eine passive Strahldüsenanordnung, die in dem Brennstoffzuführkanal angeordnet und eingerichtet ist, unter Nutzung von Strömungsunterdruck unverbrauchten Brennstoff aus dem Brennstoffzirkulationskanal anzusaugen und in den Brennstoffzuführkanal für die Zufuhr zur Brennstoffzellenanordnung einzumischen. Ein Bypasskanal ist parallel zur Strahldüsenanordnung mit dem Brennstoffzuführkanal verbunden, um die Strahldüsenanordnung in dem Brennstoffzuführkanal zu überbrücken. Eine Drucküberwachungseinrichtung, die im Brennstoffzuführkanal zwischen dem Brennstoffversorgungsanschluss und der Strahldüsenanordnung angeordnet ist, ist eingerichtet, einen Druck in dem Brennstoffzuführkanal zu überwachen und wenigstens ein Ausgangssignal auszugeben, wenn ein bestimmter Druckwert unterschritten wird. Eine Aktivierungseinrichtung, die mit der Drucküberwachungseinrichtung verbunden ist, ist eingerichtet, in Reaktion auf das Ausgangssignal der Drucküberwachungseinrichtung den Bypasskanal zur Überbrückung der Strahldüsenanordnung für die Zufuhr von Brennstoff zur Brennstoffzellenanordnung zu aktivieren.

Die Erfindung bietet den Vorteil, dass bei Absinken des Strömungsdrucks infolge eines sich entladenden Brennstoff-Vorratsspeichers die Stahldüsenanordnung in dem Brennstoffzuführkanal überbrückt werden kann, so dass in diesem Betriebsbereich keine Einschränkungen bei absinkendem Betriebsdruck vorherrschen. In einem Fall, in dem die Zirkulation im Brennstoffzirkulationskanal weiterhin aufrecht erhalten werden soll, kann eine Brennstoffpumpe vorgesehen werden, die dies anstelle der Strahldüsenanordnung bewerkstelligen kann. Somit wird in diesem Fall zusätzliche Antriebsenergie für die Brennstoffpumpe nur in einem Betriebsbereich benötigt, in dem der Strömungsdruck im Brennstoffzuführkanal unter den bestimmten Druckwert absinkt und die Zirkulation im Brennstoffzirkulationskanal aufrecht erhalten werden soll. Dies ermöglicht einen weitgehend effizienten Betrieb bei gleichzeitiger Möglichkeit, den Brennstoff-Vorratsspeicher weitgehend oder nahezu vollständig zu entleeren.

Weiterhin umfasst die Brennstoffzuführanordnung eine Brennstoffpumpe, welche mit dem Brennstoffzirkulationskanal verbunden ist und die zu der Strahldüsenanordnung zwischen dem Brennstoffzirkulationskanal und dem Brennstoffzuführanschluss parallel geschaltet ist, um unverbrauchten Brennstoff aus dem Brennstoffzirkulationskanal anzusaugen und in den Brennstoffzuführkanal für die Zufuhr zur Brennstoffzellenanordnung einzumischen. Die Brennstoffpumpe ist mit der Drucküberwachungseinrichtung verbunden und eingerichtet, in Reaktion auf das Ausgangssignal der Drucküberwachungseinrichtung in einem Pumpbetrieb betrieben zu werden, insbesondere für den Pumpbetrieb aktiviert zu werden.

Für einen effizienten Betrieb ist es vorteilhaft, wenn die Brennstoffpumpe inaktiv geschaltet ist, wenn die Drucküberwachungseinrichtung anzeigt, dass der bestimmte Druckwert nicht unterschritten ist, der Druck in dem Brennstoffzuführkanal mithin über dem Druckwert liegt. In diesem Fall ist nur die Strahldüsenanordnung für die Einmischung von unverbrauchtem Brennstoff aktiv.

Dies bietet die Möglichkeit auf den Umstand zu reagieren, dass im weiteren Verlauf eines abnehmenden Speicherdrucks unter den benötigten Triebdruck von beispielsweise 8 bis 9 bar die Leistung des Brennstoffzellensystems nicht reduziert werden muss, da die Rezirkulation des Brennstoffs von der Brennstoffpumpe aufrecht erhalten werden kann. Für einen effizienten Betrieb des Brennstoffzellensystems ist die Brennstoffpumpe vorteilhaft ansonsten inaktiv.

In einer Ausführungsform weist die Brennstoffzuführanordnung weiterhin eine Rückschlageinrichtung auf, die in dem Brennstoffzirkulationskanal vor der Ansaugseite der Strahldüsenanordnung angeordnet ist, und die eingerichtet ist, eine Rückströmung von Brennstoff über die Strahldüsenanordnung in den Brennstoffzirkulationskanal zu verhindern, wenn die Brennstoffpumpe sich im Pumpbetrieb befindet. Damit kann verhindert werden, dass die Brennstoffpumpe im aktiven Pumpbetrieb den Brennstoff rückwärtig über die Strahldüse zirkuliert.

Insbesondere weist die Rückschlageinrichtung eine Rückschlagklappe oder ein Rückschlagventil auf.

In einer Ausführungsform weist die Brennstoffzuführanordnung ein Wegeventil auf, das in dem Brennstoffzuführkanal stromabwärts vor der Strahldüsenanordnung angeordnet ist und in einer ersten Schaltstellung das Strömen von Brennstoff aus dem Brennstoff-Vorratsspeicher in die Strahldüsenanordnung erlaubt und in einer zweiten Schaltstellung das Strömen von Brennstoff aus dem Brennstoff-Vorratsspeicher in den Bypasskanal erlaubt. Hierbei ist das Wegeventil derart eingerichtet, in Reaktion auf das Ausgangssignal der Drucküberwachungseinrichtung von der ersten Schaltstellung in die zweite Schaltstellung zu schalten. Damit kann erreicht werden, dass wenn der Druck in dem Brennstoffzuführkanal unter einen eingestellten Wert fällt, automatisch ein Wegeventil, insbesondere ein 3/2-Wegeventil, geschaltet und somit die Strahldüse über den Bypasskanal überbrückt wird.

Gemäß einer weiteren Ausführungsform weist die Brennstoffzuführanordnung ein Ventil auf, das in dem Bypasskanal angeordnet ist und in einer ersten Schaltstellung das Strömen von Brennstoff in dem Bypasskanal verhindert und in einer zweiten Schaltstellung das Strömen von Brennstoff in dem Bypasskanal erlaubt, wobei das Ventil derart eingerichtet ist, in Reaktion auf das Ausgangssignal der Drucküberwachungseinrichtung von der ersten Schaltstellung in die zweite Schaltstellung zu schalten. Damit kann erreicht werden, dass wenn der Druck in dem Brennstoffzuführkanal unter einen eingestellten Wert fällt, automatisch ein Ventil in dem Bypasskanal, insbesondere ein 2/2-Wegeventil, geschaltet und somit der Bypasskanal blockiert bzw. geöffnet wird, wobei in letzterem Fall die Strahldüse über den geöffneten Bypasskanal (der einen geringeren Strömungswiderstand darstellt als die Strahldüse) überbrückt wird.

Gemäß einer Ausführungsform weist die Drucküberwachungseinrichtung einen Druckschalter oder einen Drucktransmitter auf, der eingerichtet ist, den Druck in dem Brennstoffzuführkanal zu überwachen und das Ausgangssignal auszulösen.

In einer Ausführungsform ist die Drucküberwachungseinrichtung eingerichtet das Ausgangssignal auszugeben, wenn ein Druckwert innerhalb eines Bereichs zwischen 8 und 9 bar unterschritten wird. Damit kann der Versorgungsdruck auf einen Wert von 8 bis 9 bar(g) (relativer Druck zur Außenumgebung) überwacht werden.

Insbesondere ist die Drucküberwachungseinrichtung stromabwärts vor einem Druckminderer angeordnet, der eingerichtet ist, einen Vordruck an dem Brennstoffzuführanschluss nach Maßgabe einer Sollvorgabe einzustellen. Um mögliche Rückkopplungen beim Regelvorgang zu verringern, weist der Druckminderer vorteilhaft einen Proportional-Druckminderer auf, der gemäß seiner einstellbaren Stellung die Brennstoff-Strömungsmenge stufenlos oder in mehreren Stufen proportional einstellen kann.

Im folgenden wird die Erfindung anhand der beigefügten Figuren näher erläutert. Es zeigen:
- Fig. 1: eine Ausführungsform eines erfindungsgemäßen Brennstoffzellensystems mit einem Brennstoff-Vorratsspeicher, einer Ausführungsform einer erfindungsgemäßen Brennstoffzuführanordnung und einer davon versorgten Brennstoffzellenanordnung, beispielsweise eines sogenannten Brennstoffzellenstacks;
- Fig. 2: eine weitere Ausführungsform eines erfindungsgemäßen Brennstoffzellensystems mit einem Brennstoff-Vorratsspeicher, einer weiteren Ausführungsform einer erfindungsgemäßen Brennstoffzuführanordnung und einer davon versorgten Brennstoffzellenanordnung.

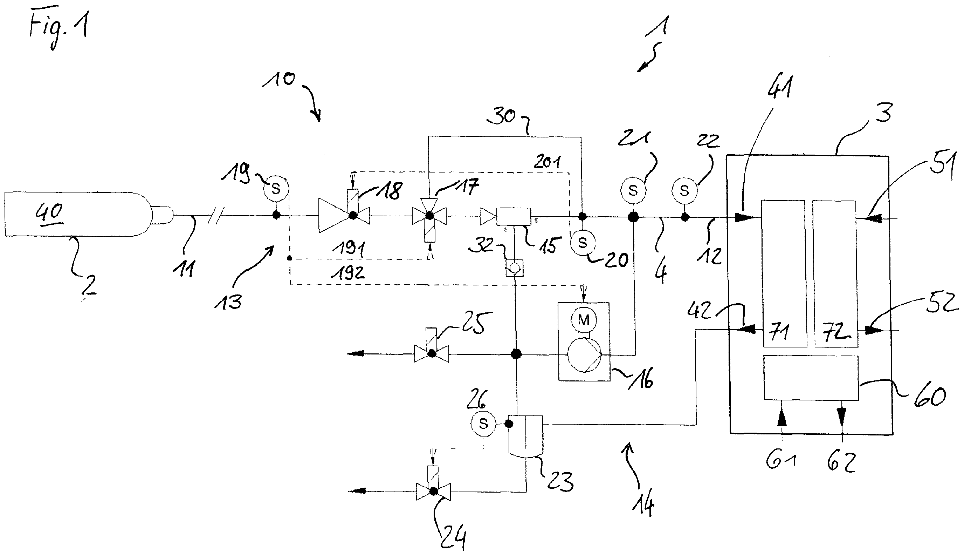

Fig.1 zeigt schematisch eine Ausführungsform eines erfindungsgemäßen Brennstoffzellensystems 1 mit einem Brennstoff-Vorratsspeicher 2, einer Ausführungsform einer erfindungsgemäßen Brennstoffzuführanordnung 10 und einer davon versorgten Brennstoffzellenanordnung 3 (beispielsweise ein Brennstoffzellenmodul oder ein Brennstoffzellenstack). Diese dient zur Erzeugung elektrischer Energie aus der Reaktion eines Brennstoffs, hier von Wasserstoff, mit einem Oxidanten, insbesondere Sauerstoff, gemäß dem bekannten Prinzip einer Brennstoffzelle. Beispielsweise umfasst das Brennstoffzellensystem 1 ein Tankmodul 2 (wobei im Prinzip jede Art von geeignetem Brennstoff-Vorratsspeicher verwendet werden kann) und ein Brennstoffzellenstack 3, wobei Wasserstoff 40 aus dem Tankmodul 2 über eine Brennstoffzuführanordnung 10 in das Brennstoffzellenstack 3 strömen kann.

Die Brennstoffzuführanordnung 10 weist dazu einen Brennstoffversorgungsanschluss 11 zur Verbindung mit dem Tankmodul 2 und einen Brennstoffzuführanschluss 12 zur Verbindung mit dem Brennstoffzellenstack 3 auf. Die Brennstoffzuführanordnung 10 kann modular vorgesehen werden und separat mit dem Tankmodul 2 und/oder dem Brennstoffzellenstack 3 vorgesehen und verbunden werden, oder auch in einem gemeinsamen Brennstoffzellenmodulgehäuse zusammen mit dem Brennstoffzellenstack 3 integriert sein. Auch kann das Tankmodul 2 in einem solchen Gehäuse integriert sein, oder separat davon vorgesehen werden. Ein Brennstoffzuführkanal 13 dient zur Zufuhr von Brennstoff aus dem Tankmodul 2 zum Brennstoffzellenstack 3 über eine Zuführleitung 4 und ist zwischen dem Brennstoffversorgungsanschluss 11 und dem Brennstoffzuführanschluss 12 angeordnet.

Über den Brennstoffversorgungsanschluss 11 einer Wasserstoffleitung kann Wasserstoff 40 aus dem Tankmodul 2 zu einem Druckminderer 18 strömen. Der Druckminderer 18 in Zusammenspiel mit dem Drucksensor 20, welcher den Druck des Gasgemisches in der Zuführleitung 4 ermittelt und den Druck kontinuierlich misst und ein entsprechendes Signal 201 ausgibt, vergleicht den Druck am Brennstoffzuführanschluss 12 mit einer Sollvorgabe und lässt das Medium nachströmen, um diesen zu halten. Vorzugsweise weist der Druckminderer 18 zu diesem Zweck einen Proportional-Druckminderer auf. Am Brennstoffzuführanschluss 12 ist die Zuführleitung 4 mit dem Brennstoffzellenstack 3 verbunden. Ein Druckschalter 21 überwacht den Druck des Wasserstoffs in der Zuführleitung 4 und schaltet bei Überschreiten des Maximaldrucks das System über eine Sicherheitsschaltung in einen sicheren Zustand, dies jedoch nur im Fehlerfall, wenn der Druck im Gasgemisch über den Maximaldruck ansteigt. Alternativ oder zusätzlich (etwa als Redundanz zum Druckschalter 21) kann ein Druckschalter 22 vorgesehen sein, der ebenfalls den Druck des Wasserstoffs in der Zuführleitung 4 überwacht und bei Überschreiten des Maximaldrucks das System über eine Sicherheitsschaltung in einen sicheren Zustand schaltet, dies wiederum nur im Fehlerfall, wenn der Druck im Gasgemisch über den Maximaldruck ansteigt. Vom Brennstoffzuführanschluss 12 aus strömt Wasserstoff 41 durch eine Wasserstoff-Zuführleitung in die Brennstoffzellenanordnung 3.

Anodenabgas, welches auch unverbrauchten Wasserstoff 42 enthalten kann, verlässt die Brennstoffzellenanordnung 3 durch eine Anodenabgasleitung der Anode 71 und wird in einen Brennstoffzirkulationskanal 14 geführt. Dieser dient dazu, unverbrauchten Wasserstoff 42 in den Brennstoffzuführkanal 13 für die erneute Zufuhr zur Brennstoffzellenanordnung 3 einzumischen. Kathoden-Betriebsgas (insbesondere Sauerstoff) tritt durch eine Luftzuführleitung 51 in die Brennstoffzellenanordnung 3 ein und verlässt diese wieder durch eine Kathodenabgasleitung 52 der Kathode 72. Kühlwasser tritt durch eine Kühlwasserzuführleitung 61 einer Kühlungsvorrichtung 60 in die Brennstoffzellenanordnung 3 ein und verlässt diese durch eine Kühlwasserentlassungsleitung 62.

Das in den Brennstoffzirkulationskanal 14 geführte Anodenabgas wird über einen Wasserabscheider 23 geführt, der flüssiges Wasser vom Gasstrom abtrennt und dieses auffängt, sobald flüssiges Wasser im durchströmenden Gasgemisch enthalten ist. Ein Füllstandschalter 26 überwacht den Füllstand des Wasserabscheiders 23 und öffnet bei Erreichen des maximalen Füllstandes das Wasserablassventil 24 sobald das Wasser im Wasserabscheider 23 den Schalter benetzt. Nach dem Schalten des Füllstandsschalters 26 wird das Wasserablassventil 24 geöffnet und das Wasser aus dem Wasserabscheider 23 abgelassen. Das Wasserablassventil 24 schließt nach vordefinierter Zeit, nach der genügend Wasser aus dem Wasserabscheider 23 abgelassen wurde, jedoch noch kein Gas am Wasserablassventil ansteht. Ein Gasablassventil 25 dient zum Ablassen des Gases aus dem System in die Atmosphäre. Meist wird eine regelmäßige Öffnung während des Betriebs durchgeführt.

Weiterhin ist eine passive Strahldüsenanordnung 15 vorgesehen, die in dem Brennstoffzuführkanal 13 angeordnet und eingerichtet ist, unter Nutzung von Strömungsunterdruck unverbrauchten Brennstoff 42 aus dem Brennstoffzirkulationskanal 14 anzusaugen und in den Brennstoffzuführkanal 13 für die Zufuhr zur Brennstoffzellenanordnung 3 einzumischen. Um den stabilen Betrieb einer Brennstoffzelle zu gewährleisten, ist es im allgemeinen notwendig, die Strömungsgeschwindigkeit auf der Wasserstoffseite über einem bestimmten Wert (ca. 3 m/s) zu halten. Dies ist entweder aktiv über den Einsatz einer Brennstoffpumpe oder passiv mittels einer Strahldüsenanordnung möglich.

Insbesondere weist die Strahldüsenanordnung eine Strahldüse auf, welche insbesondere eine passive Strahldüse ist. Diese ist insbesondere von bekannter Bauart. Die Strahldüsenanordnung kann neben der Strahldüse noch weitere zugeordnete Komponenten aufweisen, wie etwa Ventile oder dergleichen. Eine Strahldüse hat gegenüber einer Pumpe viele Vorteile, sie zirkuliert ohne den Einsatz von elektrischer Energie, es gibt keine Verschleißteile und sie entwickelt keine bis nahezu keine Geräuschemission. Passive Strahldüsen nutzen den Druckunterschied zwischen dem Triebdruck und dem Ausgangsdruck, um an der Saugseite einen Unterdruck und somit eine Strömung zu erzeugen. Dies kann jedoch in dem Falle einer möglichst effizienten Nutzung von Brennstoff-Vorratsspeichern ein Nachteil sein, wenn der Triebdruck im maximalen Betriebspunkt bei ca. 8 bis 9 bar (g) liegen soll. Um einen Speicher möglichst effizient nutzen zu können muss dieser auf einen möglichst geringen Druck (nahe atmosphärischen Druck) entladen werden können. Dies bedingt bei der Nutzung einer Strahldüse, dass der Speicher nicht komplett genutzt werden kann, das System nicht über den gesamten Speicherinhalt hinweg in seinem gesamten Leistungsbereich genutzt werden kann, oder aber das System nicht mittels Strahldüse zirkuliert werden kann, wenn der gesamte Speicherinhalt zu nutzen ist.

Hier schafft die vorliegende Erfindung Abhilfe, indem eine Drucküberwachungseinrichtung 19 im Brennstoffzuführkanal 13 zwischen dem Brennstoffversorgungsanschluss 11 und der Strahldüsenanordnung 15 vorgesehen wird. Diese überwacht einen Druck in dem Brennstoffzuführkanal 13, insbesondere in der Zuführleitung 4, vorzugsweise vor dem Druckminderer 18, und gibt wenigstens ein Ausgangssignal (im vorliegenden Ausführungsbeispiel zwei Ausgangssignale 191, 192) aus, wenn ein bestimmter Druckwert unterschritten wird. In einer bevorzugten Ausführungsform geschieht dies, wenn ein Druckwert innerhalb eines Bereichs zwischen 8 und 9 bar unterschritten wird. Der Druckwert kann vordefiniert oder voreingestellt sein, und/oder auch dynamisch, z.B. nach Lastanforderung, eingestellt oder nachgeführt werden.

Weiterhin ist ein Bypasskanal 30 vorgesehen, welcher parallel zur Strahldüsenanordnung 15 mit dem Brennstoffzuführkanal 13 verbunden ist, um die Strahldüsenanordnung 15 in dem Brennstoffzuführkanal 13 zu überbrücken. Insbesondere ist der Bypasskanal 30 eingangsseitig mit einem Eingang und ausgangsseitig mit einem Ausgang der Strahldüsenanordnung 15 verbunden. Je nach Anwendungsfall können auch noch andere Elemente, wie Ventile oder ähnliches, welche Teil der Strahldüsenanordnung sind oder dieser zugeordnet sind, vom Bypasskanal 30 überbrückt werden.

In der Ausführungsform nach Figur 1 ist weiterhin ein Wegeventil 17 vorgesehen, das in dem Brennstoffzuführkanal 13 stromabwärts vor der Strahldüsenanordnung 15 angeordnet ist. Das Wegeventil 17 ist insbesondere ein 3/2-Wegeventil. In einer ersten Schaltstellung erlaubt das Wegeventil 17 das Strömen von Brennstoff aus dem Brennstoff-Vorratsbehälter 2, mithin vom Brennstoffversorgungsanschluss 11 in die Strahldüsenanordnung 15. Der Bypasskanal 30 ist in diesem Fall von dem Wegeventil 17 geschlossen. In einer zweiten Schaltstellung erlaubt das Wegeventil 17 das Strömen von Brennstoff aus dem Brennstoff-Vorratsbehälter 2 in den Bypasskanal 30. Der Brennstoffzuführkanal 13 durch die Strahldüsenanordnung 15 hindurch ist in diesem Fall von dem Wegeventil 17 geschlossen. Das Wegeventil 17 schaltet entsprechend in Reaktion auf das Ausgangssignal 191 der Drucküberwachungseinrichtung 19 von der ersten Schaltstellung in die zweite Schaltstellung. Beispielsweise ist oder enthält die Drucküberwachungseinrichtung 19 einen Druckschalter oder einen Drucktransmitter, der so angeordnet und eingerichtet ist, den Druck in dem Brennstoffzuführkanal 13, insbesondere in der Zuführleitung 4, zu überwachen und das oder die Ausgangssignale 191, 192 auszulösen, wenn der eingestellte Druckwert erreicht oder unterschritten wird. Beispielsweise ist der Druckschalter oder Drucktransmitter im Ruhezustand und im Sicherheitsfall geschlossen (das heißt, es wird in diesem Fall kein Ausgangssignal ausgegeben). Es können auch andere Arten von Messwertgebern verwendet werden.

Mit anderen Worten wird eine Drucküberwachungseinrichtung 19 vorgesehen, die den Versorgungsdruck im Brennstoffzuführkanal 13 überwacht. Dieser wird auf einen Wert von z.B. 8 bis 9 bar (g) eingestellt bzw. überwacht. Wenn der Druck unter den eingestellten Wert fällt, wird automatisch das hier dem Druckminderer 18 in Strömungsrichtung nachfolgende Wegeventil 17 geschaltet und somit die Strahldüsenanordnung 15 überbrückt. Damit fungiert das Wegeventil 17 als eine Aktivierungseinrichtung, die mit der Drucküberwachungseinrichtung 19 verbunden ist und in Reaktion auf das Ausgangssignal 191 der Drucküberwachungseinrichtung 19 den Bypasskanal 30 zur Überbrückung der Strahldüsenanordnung 15 für die Zufuhr von Brennstoff zur Brennstoffzellenanordnung 3 aktiviert.

Damit kann das Brennstoffzellensystem 1 im Falle eines gefüllten Brennstoff-Vorratsspeichers 2 mittels der Strahldüsenanordnung 15 energiesparend und effizient betrieben werden. Damit jedoch im weiteren Verlauf eines abnehmenden Speicherdrucks unter den benötigten Triebdruck von etwa 8 bis 9 bar (g) die Leistung gegebenenfalls nicht reduziert werden muss, ist weiterhin eine Brennstoffpumpe 16 vorgesehen, welche mit dem Brennstoffzirkulationskanal 14 verbunden und zu der Strahldüsenanordnung 15 zwischen dem Brennstoffzirkulationskanal 14 und dem Brennstoffzuführanschluss 12 parallel geschaltet ist. Die Brennstoffpumpe 16 saugt im aktiven Betrieb (Pumpbetrieb) unverbrauchten Brennstoff 42 aus dem Brennstoffzirkulationskanal 14 an und mischt diesen in den Brennstoffzuführkanal 13 nach der Strahldüsenanordnung 15 für die Zufuhr zur Brennstoffzellenanordnung 3 ein. Um einen energiesparenden und effizienten Betrieb des Brennstoffzellensystems 1 zu ermöglichen, wird die Brennstoffpumpe 16 nur zeitweise betrieben. Erfindungsgemäß ist dazu vorgesehen, dass die Brennstoffpumpe 16 mit der Drucküberwachungseinrichtung 19 verbunden wird und ein Ausgangssignal 192 derselben erhält, das gleich oder entsprechend dem Ausgangssignal 191 sein kann oder sich auch signaltechnisch davon unterscheiden kann. Das Ausgangssignal 192 wird wie das Ausgangssignal 191 dann ausgegeben, wenn der bestimmte Druckwert in dem Brennstoffzuführkanal 13 unterschritten und von der Drucküberwachungseinrichtung 19 erkannt wird.

Die Brennstoffpumpe 16 ist derart eingerichtet, in Reaktion auf das Ausgangssignal 192 der Drucküberwachungseinrichtung 19 in einem Pumpbetrieb betrieben zu werden. Insbesondere in dem Fall, dass die Brennstoffpumpe 16 im Falle eines gefüllten Brennstoff-Vorratsspeichers 2 abgeschaltet ist oder sich in einem Ruhezustand befindet, wird die Brennstoffpumpe 16 in Reaktion auf das Ausgangssignal 192 für den Pumpbetrieb aktiviert. Das heißt, wenn der Druck im Brennstoffzuführkanal 13 an der Stelle der Drucküberwachungseinrichtung 19 unter den eingestellten Wert fällt, wird die Strahldüsenanordnung 15 überbrückt, wie beschrieben, und gleichzeitig wird die der Strahldüsenanordnung 15 parallel zugeordnete Brennstoffpumpe 16 aktiviert. Damit kann die Leistung des Brennstoffzellensystems 1 auch bei abfallendem Speicherdruck aufrecht erhalten werden, wobei gleichzeitig ein effizienter Betrieb ermöglicht wird, da die Brennstoffpumpe 16 nur zeitweise und bei Bedarf betrieben wird.

Damit ermöglicht die Erfindung im Prinzip die folgende vorteilhafte Kombination der Betriebsweisen:
"Strahldüse aktiv (Bypasskanal inaktiv) und Brennstoffpumpe inaktiv" bei ausreichendem Versorgungsdruck (d.h. Druck im Brennstoffzuführkanal 13 liegt bei oder über dem überwachten Druckwert; Drucküberwachungseinrichtung 19 zeigt an, dass der bestimmte Druckwert nicht unterschritten ist) und

"Bypasskanal aktiv (Strahldüse inaktiv) und Brennstoffpumpe aktiv" bei nicht ausreichendem Versorgungsdruck (d.h. der Druck im Brennstoffzuführkanal 13 liegt dementsprechend bei oder unter dem überwachten Druckwert; Drucküberwachungseinrichtung 19 zeigt an, dass der bestimmte Druckwert unterschritten ist).

Um zu verhindern, dass die Brennstoffpumpe 16 im aktiven Zustand den Wasserstoff rückwärtig über die Strahldüsenanordnung 15 zirkuliert, wird vor der Saugseite der Strahldüse eine Rückschlageinrichtung 32 vorgesehen, welche dieses verhindert. Die Rückschlageinrichtung 32 ist in dem Brennstoffzirkulationskanal 14 vor der Ansaugseite der Strahldüsenanordnung 15 angeordnet und ist eingerichtet, eine Rückströmung von Brennstoff über die Strahldüsenanordnung 15 in den Brennstoffzirkulationskanal 14 zu verhindern, wenn die Brennstoffpumpe 16 sich im Pumpbetrieb befindet. Beispielsweise weist die Rückschlageinrichtung 32 eine Rückschlagklappe oder ein Rückschlagventil auf.

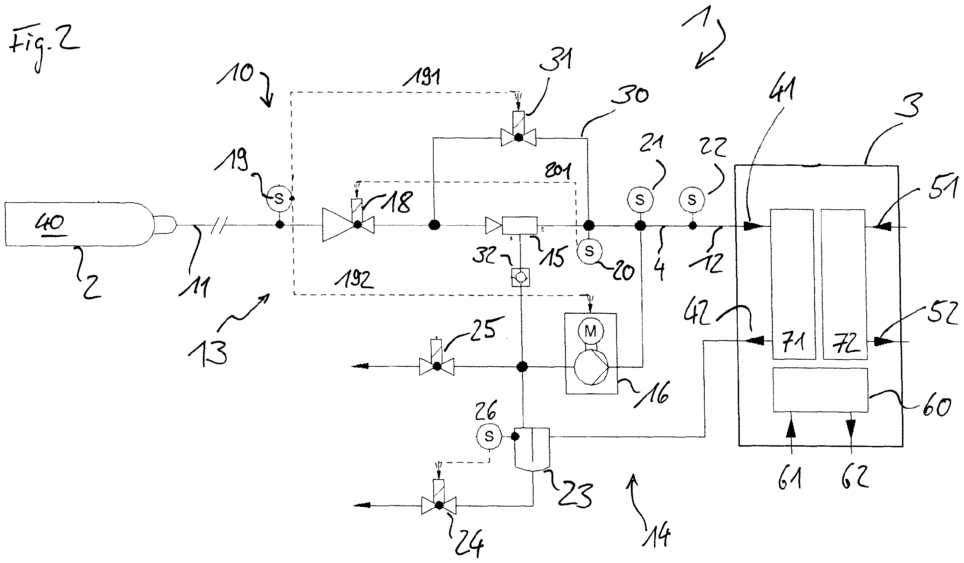

In Fig. 2 ist eine weitere Ausführungsform eines erfindungsgemäßen Brennstoffzellensystems dargestellt mit einem Brennstoff-Vorratsspeicher, einer weiteren Ausführungsform einer erfindungsgemäßen Brennstoffzuführanordnung und einer davon versorgten Brennstoffzellenanordnung. Die Ausführungsform gemäß Fig. 2 gleicht in weiten Teilen der Ausführungsform nach Fig. 1, wobei dem entsprechend gleiche Bezugszeichen verwendet wurden, so dass der Aufbau und die Wirkungsweise des Brennstoffzellensystems 1 und der Brennstoffzuführanordnung 10 in dieser Hinsicht nicht noch einmal beschrieben wird. Diesbezüglich wird auf die entsprechenden Ausführungen zu Fig. 1 verwiesen. Ansonsten ermöglicht diese Ausführungsform die gleiche Funktionsweise und die gleichen Vorteile, wie in Bezug auf die Ausführungsform der Fig. 1 beschrieben.

Im Unterschied zur Ausführungsform der Fig. 1 ist im Ausführungsbeispiel gemäß Fig. 2 im Bypasskanal 30 ein Ventil 31 vorgesehen, insbesondere ein 2/2-Wegeventil. Dieses wird in Fig. 2 statt des 3/2-Wegeventils 17 in Fig. 1 vorsehen. In einer ersten Schaltstellung verhindert das Ventil 31 das Strömen von Brennstoff in dem Bypasskanal 30, und in einer zweiten Schaltstellung erlaubt das Ventil 31 das Strömen von Brennstoff in dem Bypasskanal 30. Das Ventil 31 erhält das Ausgangssignal 191 der Drucküberwachungseinrichtung 19, wobei es eingerichtet ist, in Reaktion auf das Ausgangssignal 191 der Drucküberwachungseinrichtung 19 von der ersten Schaltstellung in die zweite Schaltstellung zu schalten.

Damit ist auch gemäß der Ausführungsform der Fig. 2 eine Drucküberwachungseinrichtung 19 vorgesehen, die den Versorgungsdruck im Brennstoffzuführkanal 13 überwacht. Dieser wird z.B. auf einen Wert von 8 bis 9 bar (g) eingestellt bzw. überwacht. Wenn der Druck unter den eingestellten Wert fällt, wird automatisch das Ventil 31 im Bypasskanal 30 auf Durchfluss geschaltet und somit die Strahldüsenanordnung 15 überbrückt (der geöffnete Bypasskanal 30 stellt einen geringeren Strömungswiderstand dar als die Strahldüse). Damit fungiert das Ventil 31 als eine Aktivierungseinrichtung, die mit der Drucküberwachungseinrichtung 19 verbunden ist und in Reaktion auf das Ausgangssignal 191 der Drucküberwachungseinrichtung 19 den Bypasskanal 30 zur Überbrückung der Strahldüsenanordnung 15 für die Zufuhr von Brennstoff zur Brennstoffzellenanordnung 3 aktiviert. Bei Vorsehen einer Brennstoffpumpe 16 wird diese in gleicher Weise über das Ausgangssignal 192 angesteuert, wie bereits in Bezug auf Fig. 1 beschrieben.

## Patentansprüche

1. Brennstoffzuführanordnung (10) für ein Brennstoffzellensystem (1) aufweisend:
- einen Brennstoffversorgungsanschluss (11) zur Verbindung mit einem Brennstoff-Vorratsspeicher (2) zur Bevorratung von Brennstoff (40) und einen Brennstoffzuführanschluss (12) zur Verbindung mit einer Brennstoffzellenanordnung (3) zur Erzeugung elektrischer Energie,
- einen Brennstoffzuführkanal (13) für die Zufuhr von Brennstoff aus dem Brennstoff-Vorratsspeicher (2) zur Brennstoffzellenanordnung (3), der zwischen dem Brennstoffversorgungsanschluss (11) und dem Brennstoffzuführanschluss (12) angeordnet ist,
- einen Brennstoffzirkulationskanal (14), der mit dem Brennstoffzuführkanal (13) verbunden ist, um unverbrauchten Brennstoff (42) aus der Brennstoffzellenanordnung (3) in den Brennstoffzuführkanal (13) zurückzuführen,
- eine passive Strahldüsenanordnung (15), die in dem Brennstoffzuführkanal (13) angeordnet und eingerichtet ist, unter Nutzung von Strömungsunterdruck unverbrauchten Brennstoff (42) aus dem Brennstoffzirkulationskanal (14) anzusaugen und in den Brennstoffzuführkanal (13) für die Zufuhr zur Brennstoffzellenanordnung (3) einzumischen,
- einen Bypasskanal (30), welcher parallel zur Strahldüsenanordnung (15) mit dem Brennstoffzuführkanal (13) verbunden ist, um die Strahldüsenanordnung (15) in dem Brennstoffzuführkanal (13) zu überbrücken,
- eine Drucküberwachungseinrichtung (19), die im Brennstoffzuführkanal (13) zwischen dem Brennstoffversorgungsanschluss (11) und der Strahldüsenanordnung (15) angeordnet und eingerichtet ist, einen Druck in dem Brennstoffzuführkanal (13) zu überwachen und wenigstens ein Ausgangssignal (191, 192) auszugeben, wenn ein bestimmter Druckwert unterschritten wird,
- eine Aktivierungseinrichtung (17, 31), die mit der Drucküberwachungseinrichtung (19) verbunden und eingerichtet ist, in Reaktion auf das Ausgangssignal (191) der Drucküberwachungseinrichtung (19) den Bypasskanal (30) zur Überbrückung der Strahldüsenanordnung (15) für die Zufuhr von Brennstoff zur Brennstoffzellenanordnung (3) zu aktivieren, und
- eine Brennstoffpumpe (16), welche mit dem Brennstoffzirkulationskanal (14) verbunden ist und die zu der Strahldüsenanordnung (15) zwischen dem Brennstoffzirkulationskanal (14) und dem Brennstoffzuführanschluss (12) parallel geschaltet ist, um unverbrauchten Brennstoff (42) aus dem Brennstoffzirkulationskanal (14) anzusaugen und in den Brennstoffzuführkanal (13) für die Zufuhr zur Brennstoffzellenanordnung (3) einzumischen,
- wobei die Brennstoffpumpe (16) mit der Drucküberwachungseinrichtung (19) verbunden und eingerichtet ist, in Reaktion auf das wenigstens eine Ausgangssignal (192) der Drucküberwachungseinrichtung (19) in einem Pumpbetrieb betrieben zu werden, insbesondere für den Pumpbetrieb aktiviert zu werden.

2. Brennstoffzuführanordnung nach Anspruch 1, wobei die Brennstoffpumpe (16) inaktiv geschaltet ist, wenn die Drucküberwachungseinrichtung (19) anzeigt, dass der bestimmte Druckwert nicht unterschritten ist.

3. Brennstoffzuführanordnung nach Anspruch 1 oder 2, weiterhin aufweisend eine Rückschlageinrichtung (32), die in dem Brennstoffzirkulationskanal (14) vor der Ansaugseite der Strahldüsenanordnung (15) angeordnet ist, und die eingerichtet ist, eine Rückströmung von Brennstoff über die Strahldüsenanordnung (15) in den Brennstoffzirkulationskanal (14) zu verhindern, wenn die Brennstoffpumpe (16) sich im Pumpbetrieb befindet.

4. Brennstoffzuführanordnung nach Anspruch 3, wobei die Rückschlageinrichtung (32) eine Rückschlagklappe oder ein Rückschlagventil aufweist.

5. Brennstoffzuführanordnung nach einem der Ansprüche 1 bis 4, aufweisend:
- ein Wegeventil (17), das in dem Brennstoffzuführkanal (13) stromabwärts vor der Strahldüsenanordnung (15) angeordnet ist und in einer ersten Schaltstellung das Strömen von Brennstoff aus dem Brennstoff-Vorratsspeicher (2) in die Strahldüsenanordnung (15) erlaubt und in einer zweiten Schaltstellung das Strömen von Brennstoff aus dem Brennstoff-Vorratsspeicher (2) in den Bypasskanal (30) erlaubt,
- wobei das Wegeventil (17) eingerichtet ist, in Reaktion auf das Ausgangssignal (191) der Drucküberwachungseinrichtung (19) von der ersten Schaltstellung in die zweite Schaltstellung zu schalten.

6. Brennstoffzuführanordnung nach einem der Ansprüche 1 bis 5, aufweisend:
- ein Ventil (31), das in dem Bypasskanal (30) angeordnet ist und in einer ersten Schaltstellung das Strömen von Brennstoff in dem Bypasskanal (30) verhindert und in einer zweiten Schaltstellung das Strömen von Brennstoff in dem Bypasskanal (30) erlaubt,
- wobei das Ventil (31) eingerichtet ist, in Reaktion auf das Ausgangssignal (191) der Drucküberwachungseinrichtung (19) von der ersten Schaltstellung in die zweite Schaltstellung zu schalten.

7. Brennstoffzuführanordnung nach einem der Ansprüche 1 bis 6, wobei die Drucküberwachungseinrichtung (19) einen Druckschalter oder einen Drucktransmitter aufweist, der eingerichtet ist, den Druck in dem Brennstoffzuführkanal (13) zu überwachen und das wenigstens eine Ausgangssignal (191, 192) auszulösen.

8. Brennstoffzuführanordnung nach einem der Ansprüche 1 bis 7, wobei die Drucküberwachungseinrichtung (19) eingerichtet ist das wenigstens eine Ausgangssignal (191, 192) auszugeben, wenn ein Druckwert innerhalb eines Bereichs zwischen 8 und 9 bar unterschritten wird.

9. Brennstoffzuführanordnung nach einem der Ansprüche 1 bis 8, wobei die Drucküberwachungseinrichtung (19) stromabwärts vor einem Druckminderer (18) angeordnet ist, der eingerichtet ist, einen Vordruck an dem Brennstoffzuführanschluss (12) nach Maßgabe einer Sollvorgabe einzustellen.

10. Brennstoffzuführanordnung nach Anspruch 9, wobei der Druckminderer (18) einen Proportional-Druckminderer aufweist.

11. Brennstoffzellensystem (1) mit einer Brennstoffzuführanordnung (10) nach einem der vorhergehenden Ansprüche und einer Brennstoffzellenanordnung (3) zur Erzeugung elektrischer Energie, die mit dem Brennstoffzuführanschluss (12) der Brennstoffzuführanordnung verbunden ist.

## Claims

1. A fuel supply arrangement (10) for a fuel cell system (1) comprising:
- a fuel provision port (11) for connection to a fuel storage reservoir (2) for storing fuel (40) and a fuel supply port (12) for connection to a fuel cell assembly (3) for generating electrical energy,
- a fuel supply duct (13) for supplying fuel from the fuel storage reservoir (2) to the fuel cell assembly (3), which is arranged between the fuel provision port (11) and the fuel supply port (12),
- a fuel circulation duct (14) connected to the fuel supply duct (13) to re - turn unconsumed fuel (42) from the fuel cell assembly (3) to the fuel supply duct (13),
- a passive jet nozzle assembly (15) disposed in the fuel supply duct (13) and configured to suck unconsumed fuel (42) from the fuel circulation duct (14) making use of negative flow pressure, and to mix the unconsumed fuel (42) into the fuel supply duct (13) for supply to the fuel cell assembly (3),
- a bypass duct (30) connected to the fuel supply duct (13) in parallel to the jet nozzle assembly (15) for bypassing the jet nozzle assembly (15) in the fuel supply duct (13),
- a pressure monitoring device (19) disposed in the fuel supply duct (13) between the fuel provision port (11) and the jet nozzle assembly (15) and configured to monitor a pressure in the fuel supply duct (13) and to output at least one output signal (191, 192) when the pressure drops below a specific pressure value,
- an activation device (17, 31) connected to the pressure monitoring device (19) and configured to activate the bypass duct (30) in response to the at least one output signal (191) of the pressure monitoring device (19) to bypass the jet nozzle assembly (15) for supplying fuel to the fuel cell assembly (3), and
- a fuel pump (16) connected to the fuel circulation duct (14) and connec - ted in parallel to the jet nozzle assembly (15) between the fuel circulation duct (14) and the fuel supply port (12) to suck unconsumed fuel (42) from the fuel circulation duct (14) and to mix the unconsumed fuel (42) into the fuel supply duct (13) for supply to the fuel cell assembly (3),
- wherein the fuel pump (16) is connected to the pressure monitoring device (19) and is configured to be operated in a pumping mode, in particu - lar to be activated for the pumping mode, in response to the at least one output signal (192) of the pressure monitoring device (19).

2. The fuel supply arrangement according to claim 1,
wherein the fuel pump (16) is switched to an inactive state when the pres - sure monitoring device (19) indicates that the pressure has not dropped be - low the specific pressure value.

3. The fuel supply arrangement according to claim 1 or 2,
further comprising a check device (32) disposed in the fuel circulation duct (14) upstream of a suction side of the jet nozzle assembly (15) and configured to prevent backflow of fuel across the jet nozzle assembly (15) into the fuel circulation duct (14) when the fuel pump (16) is in the pumping mode.

4. The fuel supply arrangement according to claim 3,
wherein the check device (32) comprises a check valve or a non-return valve.

5. The fuel supply arrangement according to any of claims 1 to 4, comprising:
- a directional control valve (17) that is disposed in the fuel supply duct (13) upstream of the jet nozzle assembly (15) and, in a first switching posi - tion, permits a flow of fuel from the fuel storage reservoir (2) into the jet nozzle assembly (15) and, in a second switching position, permits the flow of fuel from the fuel storage reservoir (2) into the bypass duct (30),
- wherein the directional control valve (17) is configured to switch from the first switching position to the second switching position in response to the at least one output signal (191) of the pressure monitoring device (19).

6. The fuel supply arrangement according to any of claims 1 to 5, comprising:
- a valve (31) that is disposed in the bypass duct (30) and, in a first switching position, prevents a flow of fuel in the bypass duct (30) and, in a second switching position, permits the flow of fuel in the bypass duct (30),
- wherein the valve (31) is configured to switch from the first switching po - sition to the second switching position in response to the at least one output signal (191) of the pressure monitoring device (19).

7. The fuel supply arrangement according to any of claims 1 to 6,
wherein the pressure monitoring device (19) comprises a pressure switch or a pressure transmitter, and wherein the pressure switch or pressure trans - mitter is configured to monitor the pressure in the fuel supply duct (13) and to trigger the at least one output signal (191, 192).

8. The fuel supply arrangement according to any of claims 1 to 7,
wherein the pressure monitoring device (19) is configured to output the at least one output signal (191, 192) when the pressure drops below a pres - sure value within a range between 8 and 9 bar.

9. The fuel supply arrangement according to any of claims 1 to 8,
wherein the pressure monitoring device (19) is arranged upstream of a pres - sure reducer (18) that is configured to set a pre-pressure at the fuel supply port (12) in accordance with a target setting.

10. The fuel supply arrangement according to claim 9,
wherein the pressure reducer (18) comprises a proportional pressure redu - cer.

11. A fuel cell system (1) comprising a fuel supply arrangement (10) according to any of the preceding claims and a fuel cell assembly (3) for generating electrical energy, said fuel cell assembly (3) being connected to the fuel supply port (12) of the fuel supply arrangement.

## Revendications

1. Agencement de distribution de combustible (10) destiné à un système de piles à combustible (1) qui présente :
un raccord d'alimentation en combustible (11) destiné à une liaison avec un dispositif de conservation de combustible (2) destiné à la conservation du combustible (40), et un raccord de distribution de combustible (12) destiné à une liaison avec un agencement de piles à combustible (3) à des fins de production d'énergie électrique ;
- un canal de distribution de combustible (13) destiné à la distribution du combustible à partir du dispositif de conservation de combustible (2) à l'agencement de piles à combustible (3), qui est disposé entre le raccord d'alimentation en combustible (11) et le raccord de distribution de combustible (12) ;
- un canal de mise en circulation du combustible (14) qui est relié au canal de distribution de combustible (13) dans le but de renvoyer du combustible qui n'a pas été consommé (42) à partir de l'agencement de piles à combustible (3) jusque dans le canal de distribution de combustible (13) ;
- un agencement d'éjecteur passif (15) qui est disposé dans le canal de distribution de combustible (13) et qui est conçu pour aspirer, en faisant appel à une dépression hydrodynamique, du combustible (42) qui n'a pas été consommé, à partir du canal de mise en circulation du combustible (14), et pour l'incorporer par mélange dans le canal de distribution de combustible (13) à des fins de distribution à l'agencement de piles à combustible (3) ;
- un canal de dérivation (30) qui est relié, en parallèle à l'agencement d'éjecteur (15), au canal de distribution de 30combustible (13) dans le but de court-circuiter l'agencement
d'éjecteur (15) dans le canal de distribution de combustible (13) ;
- un mécanisme de surveillance de la pression (19) qui est disposé dans le canal de distribution de combustible (13), entre le raccord d'alimentation en combustible (11) et l'agencement d'éjecteur (15) et qui est conçu pour surveiller une pression qui règne dans le canal de distribution de combustible (13) et pour fournir au moins un signal de sortie (191, 192) lorsqu'une valeur de pression déterminée et dépassée vers le bas ;
- un mécanisme d'activation (17, 31) qui est relié au mécanisme de surveillance de la pression (19) et qui est conçu, en réaction au signal de sortie (191) du mécanisme de surveillance de la pression (19), pour activer le canal de dérivation (13) afin de court-circuiter l'agencement d'éjecteur (15) pour la distribution du combustible à l'agencement de piles à combustible (3) ; et
- une pompe à combustible (16) qui est reliée au canal de mise en circulation du combustible (14) et qui est montée en parallèle à l'agencement d'éjecteur (15) entre le canal de mise en circulation du combustible (14) et le raccord de distribution de combustible (12), qui est destinée à aspirer le combustible (42) qui n'a pas été consommé, à partir du canal de mise en circulation de combustible (14) et à l'incorporer par mélange dans le canal de distribution de combustible (13) pour la distribution à l'agencement de piles à combustible (3) ;
- dans lequel la pompe à combustible (16) est reliée à un mécanisme de surveillance de la pression (19) et est conçu, en réaction audit au moins un signal de sortie (192) du mécanisme de surveillance de la pression (19), pour faire en sorte que la pompe intervienne de manière active dans la mise en service, en particulier pour activer le pompage.

2. Agencement de distribution de combustible selon la revendication 1, dans lequel la pompe à combustible (16) est mise par commutation en mode inactif lorsque le mécanisme de surveillance de la pression (19) indique que la valeur de pression définie n'a pas été dépassée vers le bas.

3. Agencement de distribution de combustible selon la revendication 1 ou 2, qui présente en outre un mécanisme antiretour (32) qui est disposé dans le canal de mise en circulation du combustible (14) avant le côté aspiration de l'agencement d'éjecteur (15), et qui est conçu pour empêcher un écoulement en retour du combustible par l'intermédiaire de l'agencement d'éjecteur (15) jusque dans le canal de mise en circulation de combustible (14) lorsque la pompe à combustible (16) intervient de manière active dans la mise en service.

4. Agencement de distribution de combustible selon la revendication 3, dans lequel le mécanisme antiretour (32) présente un clapet antiretour ou une soupape de non retour.

5. Agencement de distribution de combustible selon l'une quelconque des revendications 1 à 4, qui présente :
- une soupape de distribution (17) qui est disposée, dans le canal de distribution de combustible (13), en aval avant l'agencement d'éjecteur (15) et qui permet, dans une première position de commutation, l'écoulement du combustible à partir du dispositif de conservation de combustible (2) jusque dans l'agencement et d'éjecteur (15) et qui permet, dans une deuxième position de commutation, l'écoulement du combustible à partir du dispositif de conservation de combustible (2) jusque dans le canal de dérivation (30) ;
- dans lequel la soupape de distribution (17) est conçue, en réaction au signal de sortie (191) du mécanisme de surveillance de la pression (19) de passer par commutation de la première position de commutation jusque dans la deuxième position de commutation.

6. Agencement de distribution de combustible selon l'une quelconque des revendications 1 à 5, qui présente :
- une soupape (31) qui est disposée dans le canal de dérivation (30) et qui empêche, dans une première position de commutation, l'écoulement du combustible dans le canal de dérivation (30) et dans une deuxième position de commutation, l'écoulement du combustible dans le canal de dérivation (30) ;
- dans lequel la soupape (31) est conçue, en réaction au signal de sortie (191) du mécanisme de surveillance de la pression (19) de passer par commutation de la première position de commutation à la deuxième position de commutation.

7. Agencement de distribution de combustible selon l'une quelconque des revendications 1 à 6, dans lequel le mécanisme de surveillance de la pression (19) présente un commutateur manométrique ou un transmetteur de la pression qui est conçu pour surveiller la pression qui règne dans le canal de distribution de combustible (13) et pour déclencher ledit au moins un signal de sortie (191, 192).

8. Agencement de distribution de combustible selon l'une quelconque des revendications 1 à 7, dans lequel le mécanisme de surveillance de la pression (19) est conçu pour déclencher ledit au moins un signal de sortie (191, 192) lorsque l'on dépasse vers le bas une valeur de pression qui se situe au sein d'une plage entre 8 et 9 bar.

9. Agencement de distribution de combustible selon l'une quelconque des revendications 1 à 8, dans lequel le mécanisme de surveillance de la pression (19) est disposé en aval avant un réducteur de pression (18) qui est conçu pour régler une pression d'admission au niveau du raccord de distribution de combustible (12) en conformité avec une spécification de consigne.

10. Agencement de distribution de combustible selon la revendication 9, dans lequel le réducteur de pression (18) présente un réducteur de pression du type à action proportionnelle.

11. Système de piles à combustible (1) qui comprend un agencement de distribution de combustible (10) selon l'une quelconque des revendications précédentes et un agencement de piles à combustible (3) destiné à générer de l'énergie électrique, qui est relié au raccord de distribution de combustible (12) de l'agencement de distribution de combustible.
